# EUROPEAN PATENT APPLICATION

(11) **EP 1 134 994 A1**
(43) Date of publication of application: **19.09.2001**
(21) Application number: 00309330.9
(22) Date of filing: 23.10.2000
(51) Int. Cl.: H04Q 7/36

(54) **Load balancing based on Walsh code usage**

(30) Priority: 15.03.2000 US 526160
(71) Applicant: LUCENT TECHNOLOGIES INC., Murray Hill, New Jersey 07974-0636 (US)
(72) Inventor: He, Allen, Cedar Knolls, New Jersey 07927 (US)
(74) Representative: Buckley, Christopher Simon Thirsk

(57) **Abstract**

A method and apparatus improve load balancing over a plurality of carriers by assigning a carrier to a mobile terminal requesting a communication channel based on the number Walsh codes in use by each carrier. Preferably, the mobile terminal is assigned the carrier that has the least number of Walsh codes in use. The number of Walsh codes in use by the carriers can be determined either periodically, continuously, or when a request for a communication channel is received. In operation, a base station (300) receives a request for a communication channel. The base station determines the carrier having the least number of Walsh codes in use. When the carrier having the least number of Walsh codes in use is the carrier on which the request was received, the base station transmits the information needed to set up a communication channel on the carrier. When the carrier having the least number of Walsh codes in use is a different carrier than the one on which the request was received, the base station transmits the information identifying the carrier having the least number of Walsh codes in use. The base station then receives a request for a communication channel on the carrier having the least number of Walsh codes in use, and transmits the information needed to set up a communication channel on this carrier.

## Description

### Background of the Invention

### Field of the Invention

The present invention relates generally to wireless communication systems and, in particular, to load balancing in wireless communication systems with multiple carriers.

### Description of the Related Art

Wireless communication systems employ Code Division Multiple Access ("CDMA") modulation techniques to permit a large number of system users to communicate with one another. Such systems work because each signal is coded with spreading sequences, such as with pseudo-random noise ("PN") codes, and orthogonal spreading sequences, such as Walsh codes. This coding permits signal separation and signal reconstruction at the receiver. In typical CDMA systems, communication is achieved by using a different spreading sequence for each channel. This results in a plurality of transmitted signals sharing the same bandwidth. Particular transmitted signals are retrieved from the communication channel by despreading a signal from all of the signals. Despreading is achieved by using a known user despreading sequence related to the spreading sequence implemented at the transmitter.

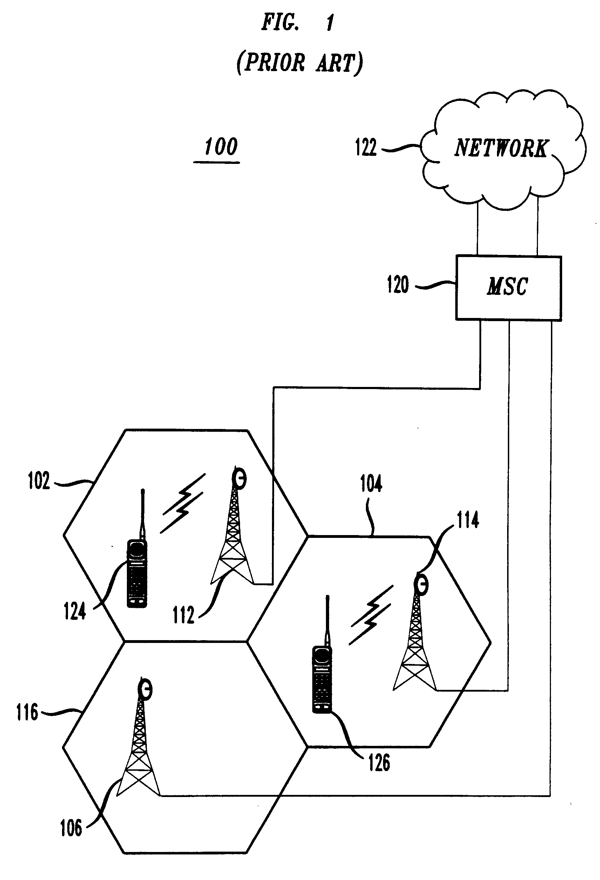

Figure 1 illustrates CDMA system 100. The geographic area serviced by CDMA system 100 is divided into a plurality of spatially distinct areas called "cells." Although cells 102, 104, 106 are illustrated as a hexagon in a honeycomb pattern, each cell is actually of an irregular shape that depends on the topography of the terrain surrounding the cell. The cells can be omni cell, or they can be divided into several sectors. Each cell 102, 104, 106 contains one base station 112, 114, and 116, respectively. Each base station 112, 114, and 116 includes equipment to communicate with Mobile Switching Center ("MSC") 120, which is connected to local and/or long-distance transmission network 122, such as a public switch telephone network (PSTN). Each base station 112, 114, and 116 also includes radios and antennas that the base station uses to communicate with mobile terminals 124, 126.

Mobile terminals 124, and 126 transmit control information to base stations 112, 114 and 116 over communication channels referred to herein as reverse control channels; and they transmit voice or data over communication channels referred to herein as reverse traffic channels. The reverse control channels include the access channel. Mobile terminals 124, and 126 use the access channel for responses to pages, for registrations with the system, and for call originations, which is where the mobile terminal requests a forward traffic channel from the base station.

Base stations 112, 114, and 116 transmit control information to mobile terminals 124, and 126 over communication channels referred to herein as forward control channels, and they transmit voice or data over communication channels referred to herein as forward traffic channels. The forward control channels include the pilot channel, and the paging channel. The pilot channel allows the mobile terminal acquire the timing of forward channels and provides the mobile terminal with a phase reference for the forward channels. The paging channel is used for the transmission of control information and for pages from the base station to the mobile terminal.

The CDMA system 100 may have several carriers, each of which would include the above described communication channels.

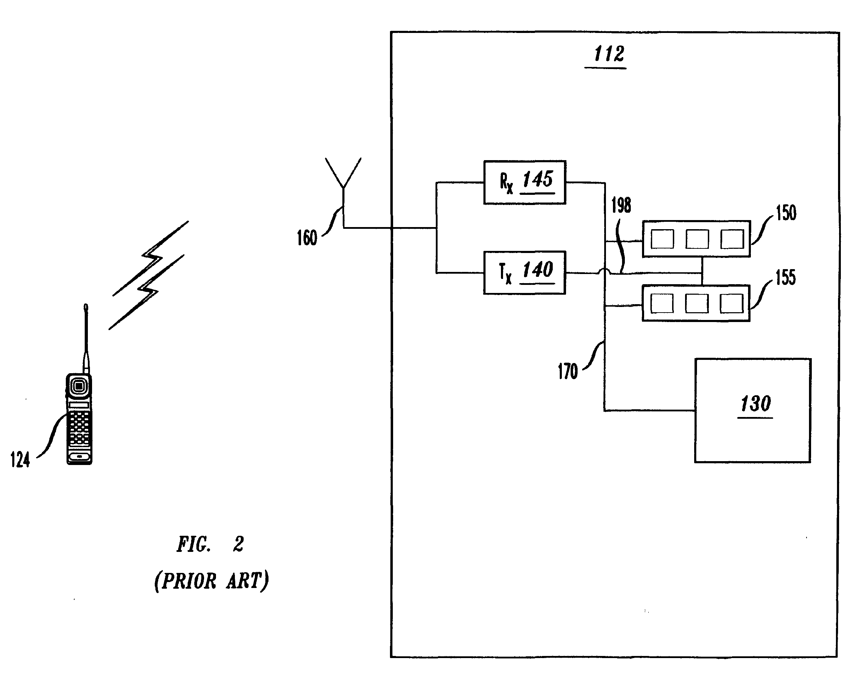

Figure 2 shows base station 112 in more detail. Base station 112 includes controller 130, a receive section, and a transmit section. Base station 112 also includes antenna 160, amplifier (not shown) and peripheral hardware (not shown).

The receive section includes a receiver RF section, referred to herein as receiver 145, and a receiver baseband section (not shown).

The transmit section includes a transmitter RF section, referred to herein as transmitter 140, and a transmitter baseband section that includes channel units 150 and 155. Although only two channel units are shown, the base station can include either more or less channel units. Controller 130 is connected to receiver 145, transmitter 140, and channel units 150 and 155 by control bus 170. Each channel unit 150 and 155 includes multiple channel elements. The channel units are typically devices that contain the channel elements and a controller, this allows grouping the channel elements for easier installation and use. Optionally, the channel units are not used and the channel elements can be coupled directly to controller 130. A channel element is required for each call being handled by the base station. A channel element encodes data with the spreading codes. For example, the channel elements encode data signals using a Walsh code and then encode the result using a PN code. Each signal transmitted by base station 112 is the output of one of the channel elements. Although only three channel elements are shown in each channel unit, each channel unit can include either more or less channel elements. The outputs of the channel elements are digitally combined to form a combined-baseband signal. The combined-baseband signal is then input into transmitter 150 via data bus 198. The transmitter slightly amplifies the signal and uses it to modulate a carrier. The modulated carrier is then amplified in an amplifier and transmitted via antenna 160 to mobile terminal 124.

When CDMA system 100 has several carriers, the base station includes a receive section and a transmit section for each carrier. Additionally, when the cell has several sectors, the base station equipment described above is repeated for each sector.

For mobile terminal 124 to set up a call in CDMA system 100, mobile terminal 124 transmits to base station 112 a request for a communication channel. Mobile terminal 124 transmits the request on an access channel of a carrier. Base station 112 may then assign mobile terminal 124 a communication channel on the carrier. In this case, base station 112 would then transmit the information needed to identify the communication channel to the mobile terminal. Alternatively, base station 112 can determine which carrier to assign to the mobile terminal. If the mobile terminal is assigned the carrier on which the request was received, base station 112 assigns a communication channel on this carrier to mobile terminal 124, and then transmits to the mobile terminal the information needed to identify the communication channel. If the mobile terminal is assigned a different carrier than the one over which the request was received, base station 112 transmits the new carrier's identity to the mobile terminal. Mobile terminal 124 then transmits a request for a communication channel on the access channel of this new carrier. Base station 112 then assigns a communication channel on the new carrier to mobile terminal 124 and transmits on the paging channel of the new carrier the information needed to identify the communication channel. The base station and mobile terminal then communicate over the communication channel, which is typically a traffic channel.

The number of signals (and therefore the number of calls) that can be transmitted simultaneously on a carrier is limited by two factors. The first limiting factor is the number of channel elements assigned to the carrier in each sector. When all the channel elements assigned to the carrier in each sector are occupied by the calls in progress, a new call on the carrier will be blocked because there is no channel element available to process the signal for the new call. The second limiting factor is the power level at which the base station's equipment, particularly the amplifier, is designed to operate over an extended time period. The power level transmitted by the base station should not exceed the power level at which the base station's equipment is designed to operate over an extended time period. The total power level of the calls on the carrier can increase under two circumstances: 1) when a call is added to the system; 2) when the noise level in the sector increases, in which case the power level of each call will need to increase to compensate for the higher noise level. When the total power level of all of the calls in a sector of the base station is at or above the power level at which the base station's equipment is designed to operate, a new call on the carrier may be blocked to protect the base station equipment.

A problem may occur when base station 112 does not make any determination of which carrier to assign a new call and just allows the mobile terminal to communicate with the base station on the carrier over which the mobile terminal transmitted the request, referred to herein as the original carrier. In this case, the new call may be blocked even though other carriers used by base station 112 may be able to accept the new call. The new call may be blocked for one of two reasons. The first reason is that the calls in progress over the original carrier in the sector where the call is placed occupy all of the channel elements assigned to the original carrier. The new call is blocked because there is no channel element available to process the signal or the new call. The second reason is that the power level of the calls in progress over the original carrier in this sector is at the maximum power level at which the base station's equipment is designed to operate. A new call on the original carrier may be blocked to protect base station 112's equipment. A call being blocked even though other carriers used by base station 112 are be able to accept the call causes an inconvenience to the user and a needless loss of revenue to the owner of the communication system.

A problem may also occur when base station 112 determines which carrier to assign to the mobile terminal using known techniques, such as a round robin technique, or power consumption technique. In the round robin technique the carriers have an order and new calls are assigned to carriers based on the order. For example, in a system with two carriers the first new call is assigned to the first carrier, the second new call is assigned to the second carrier, the third new call is assigned to the first carrier, the fourth call is assigned to the second carrier, etc.. In the power consumption technique the base station determines which carrier to assign to the mobile terminal based on the power levels of all the calls on each of the carriers in the sector. However, using these know techniques to determine which carrier to assigns to the mobile terminal may not eliminate the problem of a call being blocked when other carriers may be able to accept the call.

The round robin technique can lead to a call being blocked even though other carriers may be able to accept the call due to variations in the length of calls. For example, each carrier may have three channel elements assigned to the carrier. In one example, carrier one may receive calls one, three, and five, at times T+1 minutes (min), T+3 min., and T+5 min, each call lasting about 20 minutes. Carrier two may receive calls two, four, and six at T+2 min, T+4 min., and T+6 min, each call lasting about 2 minutes. If a mobile terminal attempts to originate call seven at T+10 min, the system will try to assign the call to carrier one, and the call will be blocked because all of the channel elements assigned to carrier one are occupied. Call seven will be blocked even though carrier two has three unoccupied channel elements and would be able to accept the call.

In another example, carrier one may be assigned two calls from mobile terminals at the far end of the cell, and the power level of the transmissions over this carrier may be at the maximum power level at which the base station's equipment is designed to operate. Carrier two may be assigned two calls from mobile terminals close to the base station, and the power level of the transmissions over this carrier may be far below the maximum power level at which the base station's equipment is designed to operate. When a request for a new call is received, the base station will attempt to assigned this call to carrier one, and the new call will then be blocked even though carrier two would be able to handle the call.

In the power consumption technique, the base station assigns the mobile terminal to the carrier that has the lowest total power level. This technique typically produces significantly better results than the other prior described methods of load balancing. This technique also does not achieve optimum load balancing in every circumstance.

Therefore, the above described load balancing techniques do not achieve optimum load balancing over several carriers. Therefore, a need exists for a method to improve load balancing to increase the overall capacity of multicarrier systems.

### Summary of the Invention

The invention improves load balancing over a plurality of carriers by assigning a carrier in response to a request for a communication channel by using the number Walsh codes in use by each carrier. The load balancing can be performed over either all or just some of the carriers serviced by a base station; and communication channels on either one or more than one carrier can be assigned in response to the request for the communication channel.

In one embodiment of the invention, the quantity of Walsh codes being used by the carriers is used to assign a carrier to a mobile terminal requesting a communication channel. Preferably, the mobile terminal is assigned a carrier that has the least number of Walsh codes in use. The number of Walsh codes in use by the carriers can be determined either periodically, continuously, or when a request for a communication channel is received.

In operation, a first request for a communication channel is received. The carrier having the least number of Walsh codes in use is determined. When the carrier having the least number of Walsh codes in use is the carrier on which the request was received, the information needed to set up a communication channel on the carrier is transmitted. When the carrier having the least number of Walsh codes in use is a different carrier than the one on which the request was received, the information identifying the carrier having the least number of Walsh codes in use is transmitted. A second request for a communication channel is received on the carrier having the least number of Walsh codes in use, and the information needed to set up a communication channel on this carrier is transmitted.

When the base station has a plurality of sectors, each sector using a plurality of carriers, a mobile terminal requesting a communication channel is assigned to a carrier using the quantity of Walsh codes in use by the carriers in the sector serving the mobile terminal.

### Brief Description of the Drawings

Figure 1 is a block diagram of a portion of a wireless communication system;
Figure 2 is a block diagram of a portion of a base station in communication with a mobile terminal; and
Figure 3 is a block diagram of a portion of a base station that assigns a carrier to a mobile terminal based on the number Walsh codes in use by the carriers used by the base station.

### Detailed Description

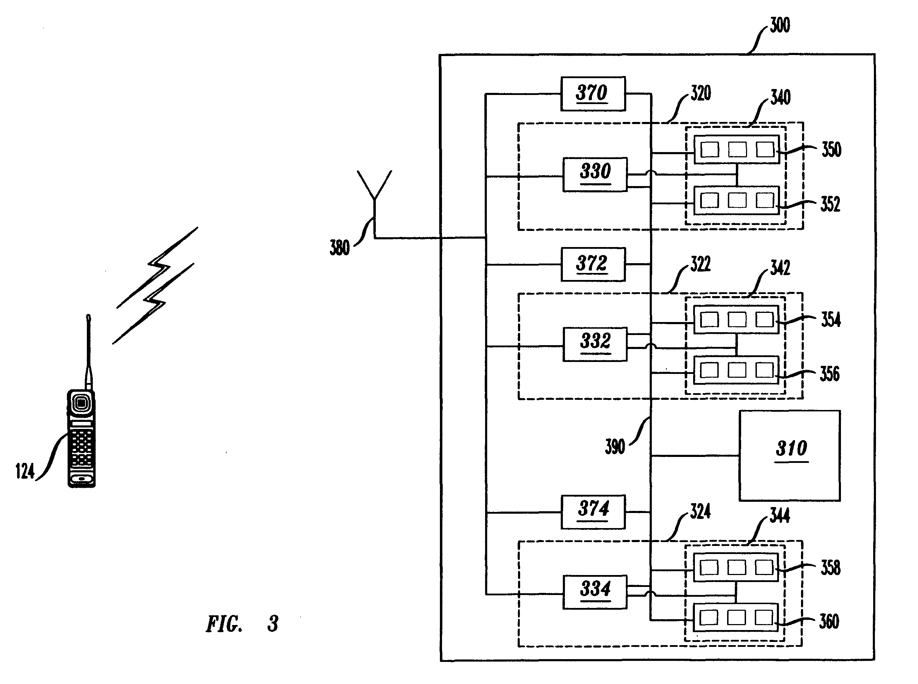

Figure 3 illustrates a portion of a base station 300 that uses a plurality of carriers. The base station can be part of a CDMA system or any wireless communication system capable of using Walsh codes.

Base station 300 includes controller 310, receive sections for each carrier used in the base station, and transmit sections 320, 322, and 324 for each carrier used in the base station, respectively. Controller 310 is connected to the receive sections and to transmit sections 320, 322, 324 by control bus 390. Base station 300 also includes antenna 380, an amplifier and peripheral hardware. Although only one antenna is shown for base station 300, the base station can have a plurality of antennas, each antenna serving one or more carriers.

Each receive section includes a receiver baseband section (not shown), and a receiver RF section. Each RF receive section includes one of the receivers 370, 372, and 374.

Each transmit section 320, 322, and 324 includes a transmitter RF section that includes one of the transmitters 330, 332, and 334, respectively. Each transmit section 320, 322, and 324 also includes a transmitter baseband section 340, 342, and 344, respectively. Each transmitter baseband section 340, 342, and 344 includes channel units 350 and 352, 354 and 356, and 358 and 360, respectively. Although only two channel units are shown in each transmitter baseband section, each transmitter baseband section can include either more or less channel units. Each channel unit 350, 352, 354, 356, 358, and 360 includes multiple channel elements. The channel units are typically devices that contain the channel elements and a controller, this allows grouping the channel elements for easier installation and use. Optionally, the channel units are not used and the channel elements can be coupled directly to controller 310. A channel element is required for each call being handled by the base station. A channel element encodes the data with the spreading codes such as the Walsh code that base station 300 assigns to the particular call. Therefore, the channel elements encode the data using the Walsh code assigned to the call. Each signal transmitted by base station 300 is the output of one of the channel elements. Although only three channel elements are shown in each channel unit, each channel unit can include either more or less channel elements. The outputs of the channel elements in a channel unit are digitally combined to form a combined-baseband signal. The combined-baseband signal is then input into the transmitter serving the same carrier as the channel unit. The combined-baseband signal is passed to the transmitter via a data bus. The transmitter slightly amplifies the signal and uses it to modulate a carrier signal. The modulated carrier signal is then amplified in an amplifier and transmitted via antenna 380 to mobile terminal 124.

For ease of reference, the carriers used by base station 300 will be referred to herein as carrier 1, carrier 2, and carrier 3. Receiver 370, transmitter 330, and channel units 350 and 352 service carrier 1. Receiver 372, transmitter 332, and channel units 354 and 356 service carrier 2. Receiver 374, transmitter 334, and channel units 358 and 360 service carrier 3. Although only three carriers, and three transmit and receive sections are shown, base station 300 can use either more, or less, than 3 carriers and would contain a transmit and receive section for each carrier.

For mobile terminal 124 to set up a call, mobile terminal 124 transmits a request for a communication channel to base station 300. Mobile terminal 124 transmits the request on an access channel of one of the carriers. For example, mobile terminal 124 transmits the request on an access channel of carrier 1. Base station 300 receives the request on receiver 370 and passes the request to controller 310. In response to the request, controller 310 assigns a communication channel on one of the carriers to mobile terminal 124, as described below.

Each channel unit sends controller 310 the number of Walsh codes that are in use by the channel unit. The channel units can send this information to controller 310 either continuously or every predetermined time period, such as every two seconds. The channel units can send the number of Walsh codes in use either independently or in response to a request from controller 310. Alternatively, controller 310 can request the number of Walsh codes in use by the channel unit when controller 310 receives the request for a communication channel. For each carrier, controller 310 then sums the number of Walsh codes in use by the channel units corresponding to a carrier to obtain the number of Walsh codes in use by the carrier. When controller 310 receives the number of Walsh codes in use periodically, controller 310 stores the sum for each carrier in a memory, such as a register within controller 310.

Controller 310 then determines which carrier has the smallest number of Walsh codes in use and assigns mobile terminal 124 a communication channel on that carrier. The assigned communication channel is typically a traffic channel.

The carrier with the smallest number of Walsh codes in use can be the carrier on which the request was received, i.e. carrier 1. In this case, the assigned communication channel is also on the carrier 1. Base station 300 transmits via transmitter 330 the information needed to set up communication on the assigned communication channel. This information is transmitted on the paging channel of carrier 1. The information needed to set up communication on the assigned communication channel includes a Walsh code. Base station 300 and mobile terminal 124 then communicate over the assigned communication channel.

The carrier with the smallest number of Walsh codes in use can be a different carrier than the carrier on which the request is received. For example, the carrier with the smallest number of Walsh codes in use can be carrier 2, and the carrier on which the request is received is carrier 1. In this case, the assigned communication channel is on a different carrier than the one on which the request was received. Base station 300 transmits via transmitter 330 information identifying carrier 2. Mobile terminal 124 then transmits a request for a communication channel on the access channel of carrier 2. Base station 300 then transmits via transmitter 330 the information needed to set up communication on the assigned communication channel. This information is transmitted on the paging channel of carrier 2. The information needed to set up communication on the assigned communication channel includes a Walsh code. Base station 300 and mobile terminal 124 then communicate over the assigned communication channel.

The foregoing is merely illustrative. Thus, for example, in the illustrative embodiment when a mobile terminal requests a communication channel from a base station that uses a plurality of carriers, the mobile terminal is assigned a communication channel on a carrier based on the number of Walsh codes in use by the carriers. In an alternative embodiment of the invention, the mobile terminal can be assigned a communication channel on a carrier by using other characteristics of the quantity of Walsh codes in use by the carriers. For example, the mobile terminal can be assigned a communication channel on a carrier based on the percentage of Walsh codes in use by the carriers.

Moreover, in the illustrative embodiment, the mobile terminal is assigned a communication channel on a carrier based on the number of Walsh codes in use by all of the carriers used by the base station. In an alternative embodiment of the invention, the mobile terminal can be assigned a communication channel on a carrier using the number of Walsh codes in use on only some of the carriers in the plurality. For example, instead of determining which of the three carriers has the smallest number of Walsh codes in use, controller 310 can determine which of carriers 1 and 2 has the smallest number of Walsh codes in use. The assigned communication channel would then be on one of these two carriers.

Furthermore, in the illustrative embodiment one communication channel is assigned on one carrier. In an alternative embodiment of the invention, a communication channel can be assigned on each of multiple carriers. For example, one communication channel can be assigned on carrier 1 and one communication channel can be assigned on carrier 2. Preferably, the carriers are the carriers that have the smallest number of Walsh codes in use amongst all of the carriers. However, although only some of the carriers may have the smallest number of Walsh in use amongst all the carriers. Alternatively, several communication channels can be assigned on one carrier.

Additionally, one skilled in the art will recognize that although in the illustrative embodiment each cell is an omni sector cell, the cell can be divided into a plurality of sectors. Each sector would then have its own transmit and receive sections for each carrier. Additionally, each sector would also have its own controller, although, the controller can be shared among the sectors. A mobile terminal requesting a communication channel would then be assigned to the carrier using the smallest number of Walsh codes in the sector serving the mobile terminal.

Furthermore, in an alternative embodiment of the invention, the mobile terminal can be assigned a communication channel on a carrier by balancing the power level of the carriers and the quantity of Walsh codes in use by the carriers. For example, the mobile terminal can be assigned a communication channel on a carrier that has the smallest power level and the smallest percentage of Walsh codes in use. Alternatively, the mobile terminal can be assigned a communication channel on a carrier that has the smallest power level and the smallest number of Walsh codes in use. Either all or some of the carriers used by the base station can be included in the determination of the carrier on which to assign the communication channel.

While the invention has been described with reference to a preferred embodiment, it will be understood by those skilled in the art having reference to the specification and drawings that various modifications and alternatives are possible therein without departing from the spirit and scope of the invention.

## Claims

1. A method of load balancing over a plurality of carriers having communication channels, the method comprising the steps of:
receiving a first request for a communication channel; and
responsive to the first request, assigning at least one carrier of the plurality of carriers using a quantity of Walsh codes in use by each of at least two carriers in the plurality of carriers.

2. The method of claim 1, wherein the at least one carrier has the smallest quantity of Walsh codes in use of each of the at least two carriers.

3. The method of claim 1, wherein the assigning step comprises assigning at least one carrier having a smallest percentage of Walsh codes in use.

4. The method of claim 1,
further comprising the step of determining the quantity of Walsh codes in use by each of the at least two carriers every predetermined time period; and
the assigning step comprises:
determining the at least one carrier of the at least two carriers having the smallest quantity of Walsh codes in use;
assigning the at least one carrier.

5. The method of claim 1, wherein the assigning step comprises the steps of:
determining the at least one carrier of the at least two carriers having the smallest quantity of Walsh codes in use;
transmitting information identifying the at least one carrier;
receiving a second request for a communication channel on the at least one carrier;
transmitting information to set up the communication channel on the at least one carrier.

6. The method of claim 5, wherein:
the first request is received on an access channel;
the information identifying the at least one carrier is transmitted on a paging channel;
the second request is received on an access channel of the at least one carrier;
the information to set up a communication channel is transmitted on a paging channel of the at least one carrier.

7. The method of claim 1, wherein the plurality of carriers consists of all carriers used by a base station (112).

8. The method of claim 1, wherein the plurality of carriers consists of all carriers used by a sector of a base station (112).

9. The method of claim 1, wherein the first request is received on an access channel.

10. The method of claim 1, wherein the assigning step further comprises:
assigning at least one carrier of the plurality of carriers using a power level of each of at least two carriers of the plurality of carriers in addition to using the quantity of channel elements in use by each of the at least two carriers.

11. The method of claim 10, wherein the assigning step comprises assigning at least one carrier having a smallest percentage of Walsh codes in use and the smallest power level.

12. The method of claim 10, wherein the assigning step comprises assigning at least one carrier having a smallest number of Walsh codes in use and the smallest power level.
